**Europäisches Patentamt**

**European Patent Office**

**Office européen des brevets**

(19)

(11) Veröffentlichungsnummer: **0 251 242 B1**

# EUROPÄISCHE PATENTSCHRIFT

(12)

(45) Veröffentlichungstag der Patentschrift: **10.04.91**

(51) Int. Cl.⁵: **B60N 2/28**, B60R 22/10

(21) Anmeldenummer: **87109215.1**

(22) Anmeldetag: **26.06.87**

(54) **Sicherheits-Kindersitz.**

(30) Priorität: **27.06.86 DE 8617129 U**
**22.11.86 DE 8631340 U**

(43) Veröffentlichungstag der Anmeldung:
**07.01.88 Patentblatt 88/01**

(45) Bekanntmachung des Hinweises auf die
Patenterteilung:
**10.04.91 Patentblatt 91/15**

(84) Benannte Vertragsstaaten:
**AT BE CH DE ES FR GB GR IT LI LU NL SE**

(56) Entgegenhaltungen:
**WO-A-86/00050**
**DE-A- 2 923 125**
**DE-A- 3 513 220**
**FR-A- 2 123 701**

(73) Patentinhaber: **Jacobi, Torsten**
**Robert-Bosch-Strasse 23**
**W-8679 Oberkotzau(DE)**

(72) Erfinder: **Jacobi, Torsten**
**Robert-Bosch-Strasse 23**
**W-8679 Oberkotzau(DE)**

(74) Vertreter: **Tergau, Enno et al**
**Patentanwälte Tergau & Pohl Postfach 11 93**
**47 Hefnersplatz 3**
**W-8500 Nürnberg 11(DE)**

**Beschreibung**

Die Erfindung betrifft einen Sicherheits-Kindersitz zur Aufstellung auf einem Fahrzeugsitz mit den im Oberbegriff des Anspruches 1 angegebenen Merkmalen.

Ein derartiger Kindersitz ist beispielsweise aus DE-A- 29 23 125 bekannt. Für diesen Sitz sind keine speziellen Befestigungsgurte od.dgl. notwendig, sondern es findet eine integrierte Halterung des Kindersitzes und des darin beförderten Kindes durch einen der Dreipunkt-Automatik-Gurte des Fahrzeuges statt. Dazu wird die vorzugsweise aus einem formstabilen Kunststoff-Vollmaterial gefertigte Sitzschale auf den Fahrzeugsitz gestellt, das Kind in den Sitz gesetzt und der Dreipunkt-Automatik-Gurt gleichzeitig mit seinem Beckenteil über den Sitzabschnitt des Kindersitzes sowie den Schoß des Kindes und der Schulterschräggurt diagonal über die Brust des Kindes geführt. Durch die übliche Fixierung des Gurtes im Gurtschloß ist das Kind mit dem Sitz festgehalten. Die Sitzschale ist mit einer Rückenlehne versehen, an deren beiden Seiten in Vertikalrichtung verlaufende Seitenwände nach vorne abstehen. An einer dieser beiden Seitenwände ist eine Führungsvorrichtung befestigbar, die den Schulterschräggurt in einer der Körpergröße des jeweils beförderten Kindes angepaßten Höhe hält. Beim vorbekannten Kindersitz besteht diese Führungsvorrichtung aus einem Streifen auf den Stirnrändern der Seitenwände, wobei der Streifen in gleichen Abständen Unterteile von Druckknöpfen trägt. Die Druckknopfunterteile können durch einen Streifen abgedeckt werden, so daß eine öse entsteht, durch welche der Schulterschräggurt hindurchgeführt und in der Höhe festgelegt wird. Durch diese anpaßbare Höhenfixierung wird vermieden, daß der Schulterschräggurt etwa über den Halsbereich des Kindes verläuft oder bei einem großgewachsenen Kind zu niedrig sitzt, so daß bei einem Unfall die Gefahr von schweren Halsverletzungen bzw. verschlechterten Rückhaltebedingungen gegeben wäre.

Nachteilig bei dem vorbekannten Kindersitz ist die Tatsache, daß der Schulterschräggurt lediglich lose in der Führungsöse an der Sitzseitenwand geführt ist. Dem Kind ist es dadurch möglich, den Gurt in Längsrichtung zu verschieben und ihn herauszuziehen, wodurch eine optimale Gurtanlage nicht mehr gewährleistet ist. Der an sich gewünschte Unfallschutz ist damit erheblich beeinträchtigt. Im ungünstigsten Fall kann das Kind sich sogar aus dem Gurt befreien und aus dem Sitz herausfallen.

Eine sicherheitstechnisch unbedenkliche Verwendung des vorbekannten Kindersitzes ist eigentlich nur mit Dreipunkt-Statik-Gurten möglich, da hier das Kind in seinem Sitzbereich ausreichend sicher festgeschnallt werden kann und durch die entsprechende Führungsvorrichtung in Zusammenwirken mit den statischen Gurten sowohl eine Verschiebung in Höhen- als auch in Längsrichtung des Gurtes ausgeschlossen ist.

Ausgehend von den geschilderten Nachteilen liegt der Erfindung die Aufgabe zugrunde, einen Sicherheits-Kindersitz der eingangs genannten Art zu schaffen, bei dem der Kindersitz und das darin beförderte Kind lediglich durch den Dreipunkt-Automatik-Gurt fixiert wird, ohne daß Einbußen in der Sicherheit und im Unfallschutz in Kauf genommen werden müssen.

Diese Aufgabe wird durch die kennzeichnenden Merkmale des Anspruches 1 gelöst. Demgemäß besteht die Führungsvorrichtung aus einem den Schulterschräggurt durch zug- und reibungsbedingten Haftschluß zusätzlich in Gurtlängsrichtung lösbar fixierenden Arretierblock, der einen oder mehrere Umlenkstege für den Gurt aufweist. Der Arretierblock übernimmt so eine Doppelfunktion, indem er die Höhen- und Längsfixierung des Schulterschräggurtes gewährleistet. Dazu muß der Gurt nur nach Art einer dornlosen Gürtelschnalle durch den Arretierblock geführt werden. Durch kurzen Zug am Gurt legt sich dieser haftschlüssig an die Umlenkstege an und kann insbesondere durch ein Kind nicht mehr verschoben werden. Im Gegenteil, versucht das Kind sich durch Zug am Gurt zu befreien, erhöht sich der Haftschluß zwischen dem Gurt und dem Arretierblock und die Fixierung wird noch verstärkt. Auch bei den hohen Zugkräften am Gurt bei einem Unfall wird diese Fixierung noch extrem verstärkt. Der erfindungsgemäße Sicherheits-Kindersitz vereint also mehrere Vorteile in sich. Zum einen ist er wegen seiner ausschließlichen Verwendung eines herkömmlichen Dreipunkt-Automatik-Gurtes sowohl zu seiner Fixierung als auch zur Halterung des Kindes universell einsetzbar und besonders schnell und einfach ein-, aus- und in ein anderes Fahrzeug umzubauen. Darüber hinaus gewährleistet er größtmöglichen Unfallschutz für das Kind, dem es unmöglich ist, durch Manipulationen am Gurt diesen Unfallschutz zu beeinträchtigen.

In den Unteransprüchen sind vorteilhafte Weiterbildungen des erfindungsgemäßen Kindersitzes angegeben. Gemäß den kennzeichnenden Merkmalen der Ansprüche 2 und 3 wird eine besonders einfache Konstruktion für den Arretierblock gelehrt. Dieser besteht im wesentlichen aus drei parallel beabstandet zueinander, in Fixierstellung im wesentlichen quer zur Gurtlängsrichtung verlaufenden Umlenkstegen, an denen der Schulterschräggurt abwechselnd oben und unten vorbeigeführt wird. Bei einer Anzahl von drei Umlenkstegen wird durch die wechselseitige Vorbeiführung des Gurtes ein ausreichender Fixiereffekt erzielt. Durch eine Ausgestaltung gemäß Anspruch 4 wird die Einführung des Schrägschultergurtes in den Arretierblock vereinfacht, ohne daß die Fixierwirkung beeinträchtigt wird.

Der rechteckförmige Querschnitt gemäß dem Kennzeichen des Anspruches 5 dient einer weiteren Verbesserung der Fixiereigenschaften des Arretierblocks. Der Arretierblock weist nämlich dadurch Kanten auf, über die der Schulterschräggurt läuft. Bei Zug auf den Schulterschräggurt entsteht an diesen Kanten ein besonders großer Haftschluß mit einer entsprechend starken Fixierung des Gurtes.

Die Querschnittsverstärkung des zentralen Umlenksteges gegenüber den äußeren Umlenkstegen erzielt zwei Vorteile. Zum einen wird der Arretierblock im ganzen verstärkt, was ihn besonders robust und widerstandsfähig gegen die bei einem Unfall auftretenden, hohen Kräfte macht. Zum anderen wird der Auslenkweg des Schulterschräggurtes aus seiner Verlaufsebene im Arretierblock erhöht. Dies erhöht wiederum den Haftschluß und die damit verbundene Fixierung des Schulterschräggurtes in Gurtlängsrichtung.

Die Ansprüche 7 bis 12 geben eine erste Alternative zur Anbringung des Arretierblocks in unterschiedlichen Höhenstellungen an der Sitzschale des Sicherheits-Kindersitzes an. Gemäß Anspruch 7 weist der Arretierblock jeweils von seinen einander abgewandten Außenseiten der Längsstege im wesentlichen in Verlängerung des zentralen Umlenksteges abstehende Fixierknebel mit T-förmigen Freienden auf. Die Freienden sind mit ihren T-Querschenkeln jeweils in ein Langloch einer jeweils in Vertikalrichtung im Sitzbezug an den Seitenwänden der Sitzschale verlaufenden Langlochreihe einsetzbar. Diese Konstruktion zeichnet sich durch besondere Einfachheit aus, wobei der Arretierblock jedoch zuverlässig an der Sitzschale befestigt ist. Für eine entsprechende Höhenanpassung des Arretierblocks müssen die T-förmigen Freienden der Fixierknebel lediglich aus ihren Langlöchern herausgenommen und in entsprechend höheren oder tieferen wieder eingesetzt werden. Die Länge der Langlochreihen ist dabei dem gewünschten Höhenverstellbereich des Kindersitzes angepaßt.

In den Ansprüchen 8 und 9 sind verschiedene Möglichkeiten zur Positionierung der Langlochreihen angegeben. Bei der Alternative gemäß Anspruch 9 liegt der Arretierblock durch die Anordnung der Langlochreihen an den einander abgewandten Außenseiten der Seitenwände nicht im direkten Zugriffsbereich des im Kindersitz beförderten Kindes. Der Arretierblock und mithin die Lagefixierung des Schulterschräggurtes sind damit vor Manipulationen durch das Kind weitgehend geschützt. Es ist darauf hinzuweisen, daß trotz der Verwendung nur eines Arretierblockes zwei Langlochreihen vorgesehen sind. Damit kann der Kindersitz alternativ in Fahrtrichtung rechts oder links eingebaut werden. Der Arretierblock wird entsprechend in die auf der außenliegenden Seitenwand angeordnete Langlochreihe eingesetzt.

Durch eine Anordnung der Langlöcher gemäß Anspruch 10 wird eine einfache Handhabung des Arretierblockes beim Anbringen und Abnehmen erzielt. Die Fixierknebel werden gegenüber ihrer Normallage in sich verdreht, bis sie mit den Langlöchern fluchten. Dann können sie eingesetzt und durch Loslassen in ihre normale Lage zurückfedern. Die Fixierknebel sind damit in den Langlöchern unter dem Sitzbezug fixiert. Entsprechend umgekehrt wird beim Herausnehmen des Arretierblockes verfahren.

Eine weiter verbesserte Halterung des Arretierblocks in den Langlochreihen ist in den Ansprüchen 11 und 12 angegeben. Einen besonders geglückten Kompromiß zwischen zuverlässiger Halterung und einfacher Handhabung stellt dabei eine Ausgestaltung der Langlochreihen gemäß Anspruch 11 dar. Alternierend sind nämlich Langlöcher in einem spitzen Winkel von vorzugsweise 45° und Langlöcher mit einer Längsaxialen Ausrichtung parallel in einer Linie zur Reihenrichtung angeordnet. Entspricht das Abstandsmaß zwischen zwei benachbarten Langlöchern dabei jeweils einem ungeradzahligen Bruchteil des Abstandes der beiden Fixierknebel des Arretierblockes, so sitzen die Fixierknebel in Einsatzstellung immer in einem im spitzen Winkel zur Reihenrichtung bzw. parallel dazu angeordneten Langloch. In der Befestigungsstellung ist das T-förmige Freiende des in das parallel zur Reihenrichtung angeordnete Langloch eingesetzten Fixierknebel dann um 90° gegenüber dem Langloch verdreht. Dies bedeutet, daß es besonders sicher im Langloch festgehalten ist. Der zweite Fixierknebel ist durch dessen Verdrehung um 45° gegen die Reihenlängsrichtung in das Langloch wie oben beschrieben einsetzbar.

Sind alle Langlöcher einer Reihe mit ihrer längsaxialen Ausrichtung parallel und in einer Linie zur Reihenrichtung angeordnet, so müssen zwar die Fixierknebel des Arretierblocks zum Einsetzen in die Langlöcher jedesmal um 90° verdreht werden, jedoch wird durch diese Befestigungsart ein besonders sicherer Halt für den Arretierblock erzielt.

Eine Alternative zur Befestigung des Arretierblocks an den Seitenwänden der Sitzschale ist in den Ansprüchen 13 bis 15 angegeben. Demnach ist der Arretierblock auf einem Klettgewebeträger lösbar befestigt. Letzterer ist in unterschiedlichen Höhenstellungen am Bezugstoff der Stirnseite der Seitenwände fixierbar. Dies stellt eine besonders handhabungsfreundliche Alternative dar, da der Klettgewebeträger sehr einfach anbring-und abnehmbar ist, sowie in unterschiedlichen Höhenlagen stufenlos an den Seitenwänden fixierbar ist.

Damit der Schulterschräggurt in den Arretierblock eingeführt und um die Umlenkstege herumgelegt werden kann, ist er mittels beiderseits außerhalb seines Arretierbereiches liegender Druckknopfverbindungen auf dem Klettgewebeträger befestigbar. Die Druckknöpfe vereinbaren zwei Handhabungsvorteile auf sich: Zum ersten wird dadurch eine dauerhafte und haltbare Verbindung zwischen dem Arretierblock und dem Klettgewebeträger geschaffen, jedoch ist die Handhabung zum Abnehmen und Aufsetzen des Arretierblocks denkbar einfach.

Eine Ausgestaltung des Klettgewebeträgers gemäß Anspruch 15 dient einer weiteren Verbesserung der Haftung des Klettgewebeträgers auf dem Bezugstoff der Sitzschale. Durch das Übergreifen der beiderseits rechtwinklig von der Gewebebahn abstehenden Ansatzflächen über die vertikalen Stirnkanten der Seitenwände erfolgt eine Befestigung des Klettgewebeträgers in zwei Ebenen. Da Klettverbindungen insbesondere gegenüber parallel zu ihrer Haftebene verlaufenden Scherkräften eine höhere Haltekraft aufweisen als gegenüber rechtwinklig zur Haftfläche wirkenden Zugkräften, wird durch die im wesentlichen in zwei rechtwinklig zueinander stehenden Hauptebenen angeordnete Haftfläche eine besonders stabile Verbindung geschaffen. Diese kann allen möglichen auftretenden Kräften am Arretierblock widerstehen.

Die Ansprüche 16 und 17 geben Maßnahmen an, mit denen zur Höhenverstellung des Schrägschultergurtes nicht mehr der Arretierblock selbst höhenverstellt werden muß. Dessen Umlenkstege weisen nämlich eine Länge auf, die einem Mehrfachen der Gurtbreite entspricht. Damit kann der Gurt in unterschiedlichen Höhenstellungen durch den in seiner Position festen Arretierblock geführt werden. Zur Höhenverstellung muß lediglich der Gurt entspannt werden und parallel zu den Umlenkstegen verschoben werden. Ein kurzer Zug am Gurt stellt wieder den zug- und reibungsbedingten Haftschluß zwischen Gurt und dem Arretierblock und die damit verbundene Höhen- und Längsrichtungsfixierung her. Damit wird auf einfache Weise der Bedienungskomfort wesentlich verbessert. Dies ist insbesondere dann von Vorteil, wenn beispielsweise der Sitz abwechselnd von Kindern mit unterschiedlichem Alter und folglich unterschiedlicher Körpergröße verwendet werden soll.

Entspricht die Länge der Umlenkstege dem gewünschten, relevanten Höhenverstellbereich der Führungsvorrichtung, so ist ein Abnehmen und Aufsetzen des Arretierblockes nur noch beim Einbau bzw. Herausnehmen des Sicherheits-Kindersitzes notwendig. Da dies in der Regel selten erfolgt und an sich bereits unkompliziert ist, ist der erfindungsgemäße Kindersitz besonders benutzerfreundlich.

Durch das Kennzeichen des Anspruches 18 wird die Halterung des langen Arretierblockes verbessert.

Bei einer Verwendung des mit verlängerten Umlenkstegen ausgestatteten Arretierblocks entfällt die Notwendigkeit, diesen höhenverstellbar auszugestalten. Also müssen statt der Langlochreihen nur jeweils zwei Langlöcher an der unteren und oberen Grenze des Höhenverstellbereiches an den Seitenwänden angeordnet sein (Anspruch 19). Sind weitere Fixierknebel über die Länge des zentralen Umlenksteges verteilt, so muß lediglich eine der Anzahl und Position dieser Fixierknebel entsprechende Zahl von Langlöchern über den gewünschten Höhenverstellbereich verteilt sein. Durch die geringere Anzahl von Langlöchern reduziert sich der Fertigungsaufwand bei der Herstellung des Sitzbezuges. Darüber hinaus weist dieser dadurch in sich eine höhere Stabilität auf.

Durch eine Ausgestaltung des Arretierblocks gemäß Anspruch 20 wird die Fixierung des Schulterschräggurtes im Arretierblock weiter verbessert. Die Verbreiterungsplatte im Arretierblock hat nämlich zur Folge, daß die Umlenkwinkel des Gurtes im Arretierblock erheblich größer als 90° sind, der Gurt im Längsschnitt also nach Art einer in der Textiltechnik so bezeichneten Kellerfalte geführt wird.

Gemäß dem kennzeichnenden Merkmal des Anspruches 22 sind die Durchbrechungen in äußeren Umlenkstegen jeweils mittels einer auf diesen verschiebbar gelagerten Hülse überbrückbar. Diese Maßnahme dient zum einen einer verbesserten Führung und Fixierung des Schrägschultergurtes im Arretierblock, da die äußeren Umlenkstege durch die auf ihnen gelagerte Hülse in Fixierstellung nicht mehr unterbrochen sind. Der Gurt liegt damit vollflächig an den äußeren Umlenkstegen an. Zum anderen beaufschlagen keine stumpfen Enden der Umlenkstege mehr den Gurt, wodurch dieser geschont wird.

Durch eine Ausbildung des Arretierblocks aus einem zähelastischen, formstabilen Kunststoff-Vollmaterial gemäß Anspruch 23 ist dieser besonders an seinen bestimmungsmäßigen Einsatz angepaßt. Die vergleichsweise massiven Umlenk- und Längsstege geben bei Zug, Druck od.dgl. nur wenig nach. Demgegenüber sind beispielsweise die einstückig angesetzten Fixierknebel zum Einsetzen in die Langlöcher in sich verdrehbar. Ihre Ausgangsstellung nehmen sie wegen der Zähelastizität des Werkstoffes und der damit verbundenen Rückfederkraft selbsttätig wieder ein.

Durch die Maßnahme gemäß Anspruch 24 wird die Fixierung des Schulterschräggurtes in dessen Längsrichtung weiter verbessert.

Die Erfindung wird anhand der beiliegenden Figuren in Ausführungsbeispielen näher erläutert.

Es zeigen:

Fig. 1         eine Vorderansicht des auf einem Fahrzeugsitz aufgestellten Sicherheits-Kindersitzes mit angelegtem Dreipunkt-Automatik-Gurt,

Fig. 2         eine Draufsicht auf den Arretierblock,

Fig. 3         dessen Seitenansicht aus Pfeilrichtung III gemäß Fig. 2,

Fig. 4         dessen Seitenansicht aus Pfeilrichtung IV gemäß Fig. 2,

Fig. 5         bis 7 perspektivische Ansichten des Arretierblockes in verschiedenen Handhabungszwischenschritten bei seiner Montage

Fig. 8         einen schematischen Horizontalschnitt durch den Kindersitz mit angebrachtem Arretierblock,

Fig. 9         bis 12 Vorder- bzw. Seitenansichten von Kindersitzen mit Langlöchern bzw. Langlochreihen in alternativen Ausführungsformen,

Fig. 13,14    alternative Anordnungsmöglichkeiten für die Langlöcher in den Langlochreihen,

Fig. 15        eine perspektivische Ansicht eines Arretierblockes mit alternativer Befestigung mittels eines Klettgewebeträgers,

Fig. 16,17    Längsschnitte in unterschiedlichen Handhabungspositionen des Gurtes entlang der Geraden XVI-XVI gemäß Fig. 15,

Fig. 18        eine Draufsicht auf den Klettgewebeträger und

Fig. 19,20    perspektivische Ansichten von Arretierblöcken mit verlängerten Umlenkstegen.

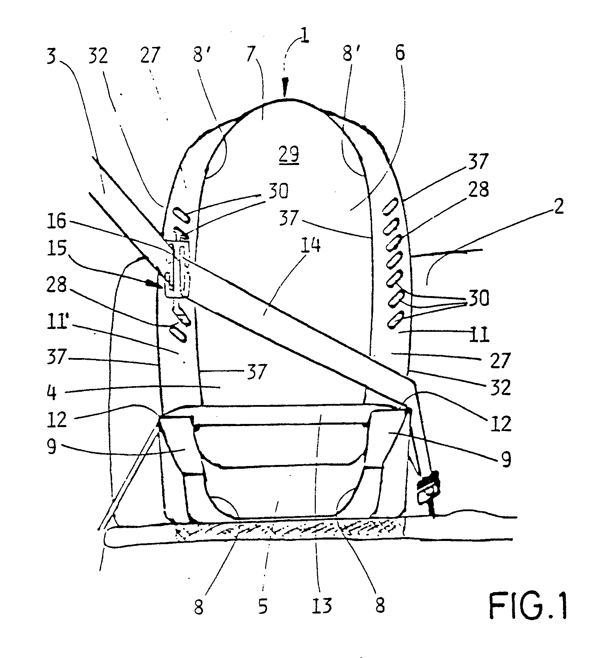

In Fig. 1 ist der Sicherheits-Kindersitz 1 (im folgenden kurz "Kindersitz" genannt) in seiner Aufstellposition auf einem Fahrzeugsitz, in diesem Fall der Rückbank 2 gezeigt. Dabei wird das System der integrierten Halterung des Kindersitzes 1 und des (nicht dargestellten) sich im Sitz befindlichen Kindes einzig durch den Dreipunkt-Automatik-Gurt des Fahrzeuges angewendet.

Der Kindersitz 1 weist eine einstückig aus einem formstabilen Kunststoff-Vollmaterial gefertigte Sitzschale 4 auf, die aus einem Sitzbodenkörper 5 und einer Rückenlehne 6 mit integrierter Kopfstütze 7 zusammengesetzt ist. An den beiden fahrtrichtungsparallelen Seitenrändern 8 des Sitzbodenkörpers 5 stehen vertikal nach oben die beiden Armlehnen 9 ab. Die Rückenlehne 6 ist an ihren beiden vertikalen Seitenrändern 8,8' mit in Vertikalrichtung verlaufenden, in Fahrtrichtung 10 nach vorne abstehenden Seitenwänden 11,11' versehen. Die Abstehlänge der Seitenwände 11 ist so bemessen, daß einerseits dem beförderten Kind eine genügende Seitenstabilisierung und seitlicher Prallschutz bei einem Unfall gewährt wird, andererseits jedoch die Sicht nach beiden Seiten nicht behindert wird.

Zur körpergerechten Lagefixierung des Dreipunkt-Automatik-Gurtes 3 sind verschiedene Führungen am Kindersitz 1 vorgesehen. Zum ersten sind dieses die beiden Aussparungen 12 zwischen den Armlehnen 9 und den Seitenwänden 11. In diesen Aussparungen 12 liegt der Beckenteil 13 des Gurtes 3 ein, der somit über den Schoßbereich des beförderten Kindes verläuft. Da aus Sicherheitsgründen der Schulterschräggurt 14 des Dreipunkt-Automatik-Gurtes 3 in seiner Höhenlage möglichst exakt der Körpergröße des beförderten Kindes angepaßt sein muß, ist an der dem oberen Anlenkpunkt des Gurtes 3 zugewandten Seitenwand 11' eine Führungsvorrichtung 15 zur Höhenfixierung des Schulterschräggurtes 14 angebracht. Der Schulterschräggurt 14 darf nämlich weder zu hoch und damit über den Hals des beförderten Kindes, noch zu niedrig und damit über den abdominalen Körperbereich des Kindes verlaufen. Im ersten Fall kann das Kind bei einem Unfall erdrosselt werden, im zweiten Fall können schwerste innere Verletzungen auftreten. Darüber hinaus muß dafür Sorge getragen werden, daß der Dreipunkt-Automatik-Gurt 3 auch in seiner Längsrichtung fixiert ist, da ansonsten das Kind durch Manipulationen den Gurt 3 aus seiner Soll-Lage verschieben kann.

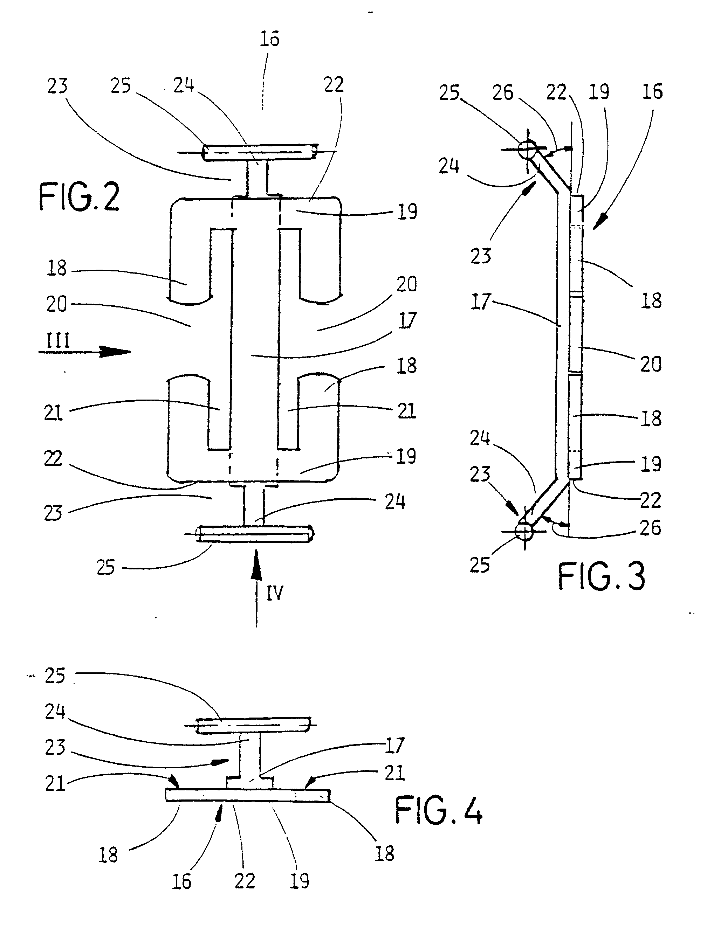

Dies wird dadurch verhindert, daß die Führungsvorrichtung 15 als Arretierblock 16 ausgebildet ist, der den Schulterschräggurt 14 sowohl in Höhen- als auch Längsrichtung fixiert. Die Wirkungsweise, Anbringung und Hohenverstellung des Arretierblocks 16 in seinen verschiedenen Ausführungsformen wird anhand der weiteren Figuren 2 bis 20 erläutert.

Die Fig. 2 bis 4 zeigen den Arretierblock 16 in einer ersten Ausführungsform in verschiedenen Ansichten. Er besteht aus einem zentralen Umlenksteg 17 und den beiden äußeren Umlenkstegen 18, welche parallel zueinander beabstandet im wesentlichen in einer Ebene angeordnet sind. Endseitig sind die Umlenkstege 17,18 durch Längsstege 19 verbunden. Durch die etwa mittig angeordneten Durchbrechungen 20 in den äußeren Umlenkstegen 18 ist der Schulterschräggurt 14 in die Führungsschlitze 21 zwischen den Umlenkstegen 17,18 einführbar. Die Länge der Durchführungen 20 entspricht dabei einem Bruchteil der Gurtbreite. Durch seine Anlage an den Umlenkste en 17,18 wird der Schulterschräggurt 14 durch zug- und reibungsbedingten Haftschluß in Längsrichtung fixiert. In dieser Fixierstellung verläuft der Schulterschräggurt 14 im wesentlichen rechtwinklig zu den Umlenkstegen 17,18, die Haftschlußfixierung ist dabei am besten mit der bei einer dornlosen Gürtelschnalle zu vergleichen.

Die Umlenkstege 17,18 sind im Querschnitt rechteckförmig ausgebildet, so daß durch die knickartige Umlenkung des Schulterschräggurtes 14 an deren Kanten ein besonders hoher Haftschluß und damit stabile Fixierung erfolgt. Der zentrale Umlenksteg 17 ist darüber hinaus im Querschnitt nach unten verstärkt, wodurch dem gesamten Arretierblock 16 eine besondere Stabilität verliehen wird.

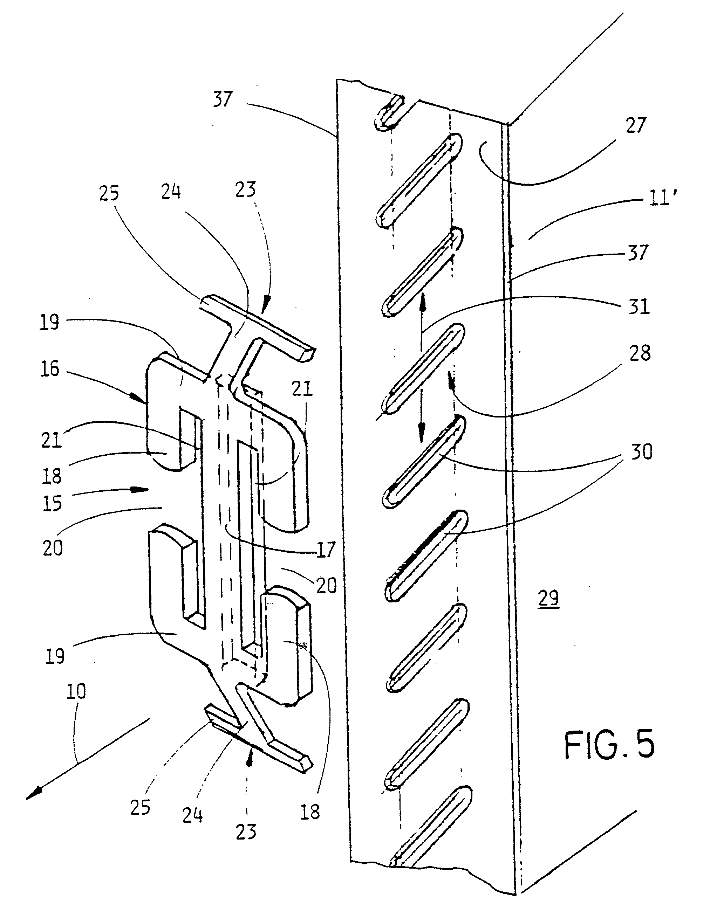

Der Arretierblock 16 ist jeweils mit von den einander abgewandten Außenseiten 22 der Längsstege 19 im wesentlichen in Verlängerung des zentralen Umlenksteges 17 abstehenden Fixierknebeln 23 versehen, deren Funktion in Verbindung mit den Fig. 5 bis 7 klar wird. Die Fixierknebel 23 weisen T-förmige Freienden 24 auf, deren T-Querschenkel 25 zylinderförmig ausgebildet und gegenüber der durch die Umlenkstege 17,18 gebildeten Hauptebene verdrehbar sind. Die Fixierknebel 23 stehen in einem spitzen Winkel 26 gegenüber dieser Hauptebene schräg nach unten ab. In ihrer Normalstellung sind die T-Querschenkel 25 mit ihrer Längsrichtung parallel zur Hauptebene ausgerichtet.

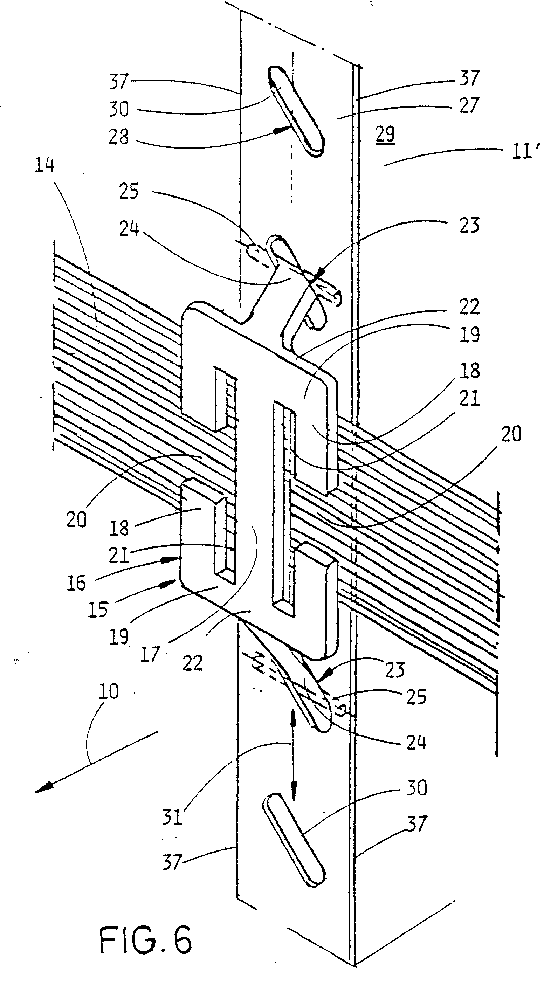

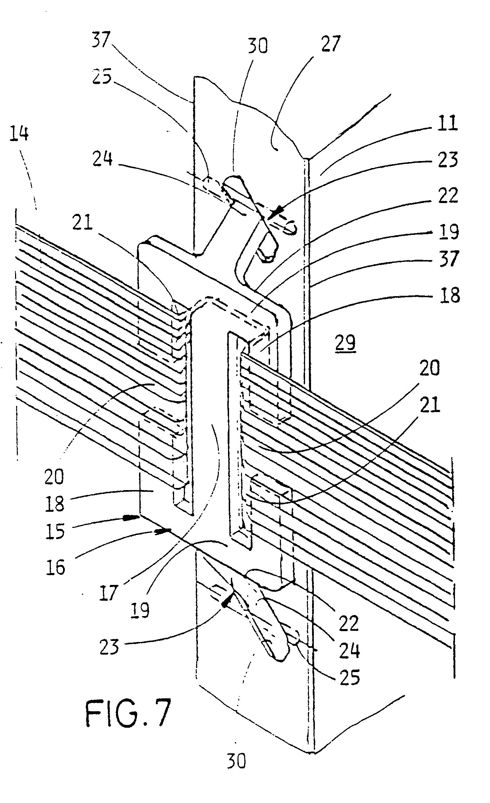

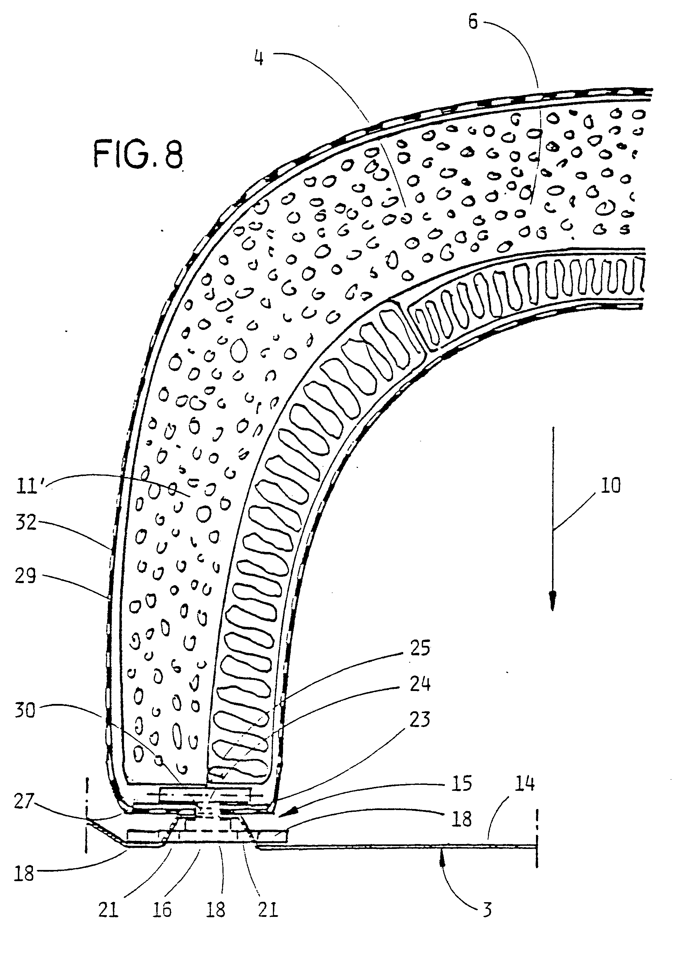

In den Fig. 5 bis 7 ist die Vorgehensweise zur Anbringung des Arretierblocks 16 an der in Fahrtrichtung 10 weisenden Stirnseite 27 der Seitenwand 11' dargestellt. Gemäß den Fig. 1 und 5 bis 7 ist in jede der Stirnseiten 27 eine Langlochreihe 28 in den die gesamte Sitzschale 4 umspannenden Sitzbezug 29 in Vertikalrichtung verlaufend eingebracht. Die randseitig verstärkten Langlöcher 30 einer Langlochreihe 28 sind parallel zueinander beabstandet aneinandergereiht und nehmen zur Reihenrichtung 31 einen Winkel von etwa 45° ein. Ausgehend von der in Fig. 5 gezeigten, losgelösten Lage des Arretierblockes 16 wird zuerst der Schulterschräggurt 14 des Dreipunkt-Automatik-Gurtes 3 in die entsprechende Höhenlage an den Stirnseiten 27 der Seitenwand 11' verbracht. Anschließend wird vor den Gurt der Arretierblock 16 gesetzt. Dies erfolgt durch eine Verdrehung der T-Querschenkel 25 der Fixierknebel 23 gegenüber den Längsstegen 19, so daß die T-Querschenkel in die Langlöcher mit jeweils der passenden Höhenlage eingeführt werden können. Anschließend verdrehen sich die T-Querschenkel 25 durch ihre Eigenfederkraft unterhalb des Sitzbezuges 29 in die Ausgangslage zurück und können somit nicht mehr herausgezogen werden. Diese Situation ist in Fig. 6 dargestellt. Die Fixierung des Schulterschräggurtes 14 in seiner Längsrichtung erfolgt durch ein Hindurchziehen des Gurtes durch die Durchbrechungen 20 in den beiden äußeren Umlenkstegen 18. Der Schulterschräggurt 14 verläuft damit über den ersten äußeren Umlenksteg 18, wird mittels diesen nach hinten durch den ersten Führungsschlitz 21 umgelenkt, läuft hinter dem zentralen Umlenksteg 17 entlang zurück durch den zweiten Führungsschlitz 21 wieder nach vorne und läuft über den zweiten äußeren Umlenksteg 18 weiter. Im Querschnitt ergibt sich damit im wesentlichen ein U-förmiger Gurtverlauf, der insbesondere in den Fig. 7 und 8 dargestellt ist. Nach dem Hindurchführen des Schulterschräggurtes 14 reicht ein kurzer Zug an diesem, um die in den Fig. 7 und 8 dargestellte Soll-Lage des Gurtes durch Haftschluß an den Umlenkstegen 17,18 zu fixieren. Aus der vorstehenden Beschreibung wird klar, daß die Höhenlage und Längsposition des Schulterschräggurtes 14 bzw. Arretierblokkes 16 unabhängig voneinander angepaßt kann. Zur Höhenanpassung muß lediglich der Arretierblock 16 zusammen mit dem Schulterschräggurt 14 in ein anderes, entsprechendes Langlochpaar eingesetzt werden. Zur Änderung der Längsposition des Schulterschräggurtes 14 gegenüber dem Arretierblock 16 müssen nur die beiden vom Arretierblock 16 weglaufenden Gurtbahnen manuell entspannt und in der entsprechenden Längsposition wieder durch kurzen Zug fixiert werden. Soll der Kindersitz auf der anderen Seite mit entsprechend zu Fig. 1 spiegelsymmetrischen Gurtverlauf angeordnet werden, so muß der Arretierblock in die in Fig. 1 rechts liegende Langlochreihe 28 eingesetzt werden.

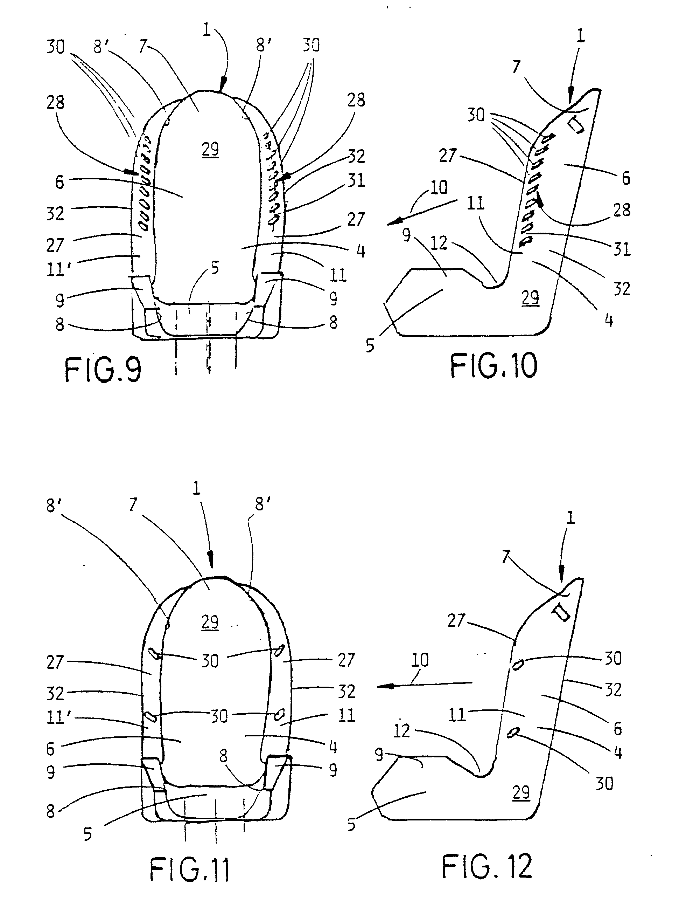

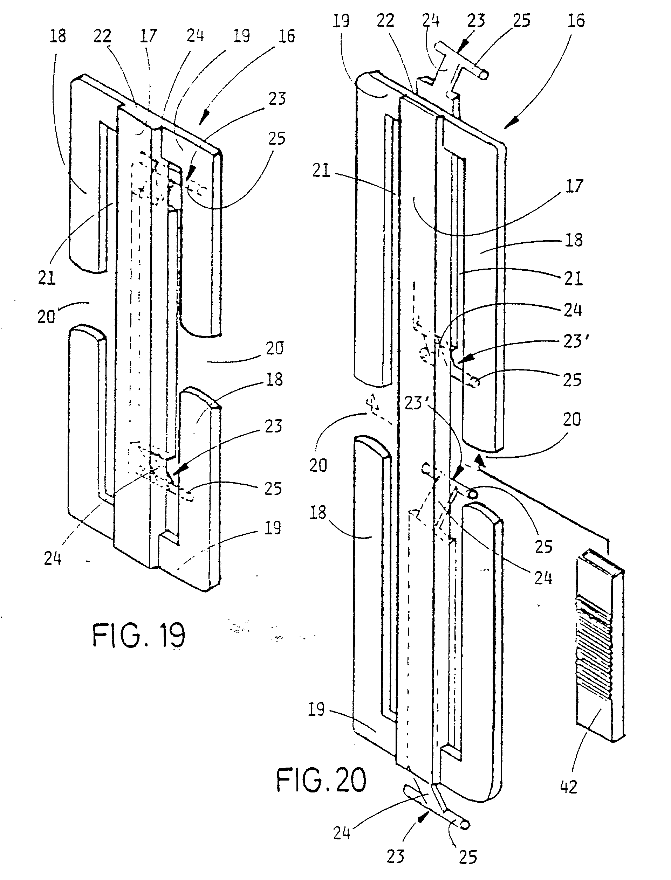

Wie in den Fig. 9 und 10 dargestellt, kann die Langlochreihe 28 sowohl jeweils in den Stirnseiten 27 der Seitenwände 11,11' angeordnet sein, es ist jedoch auch eine Anbringung an den einander abgewandten Außenseiten 32 der Seitenwände 11,11' im Randbereich zu den Stirnseiten 27 denkbar (Fig. 10). Die in den Fig. 11 und 12 dargestellte Anordnung von Langlochpaaren wird im Zusammenhang mit den Fig. 19 und 20 näher erläutert.

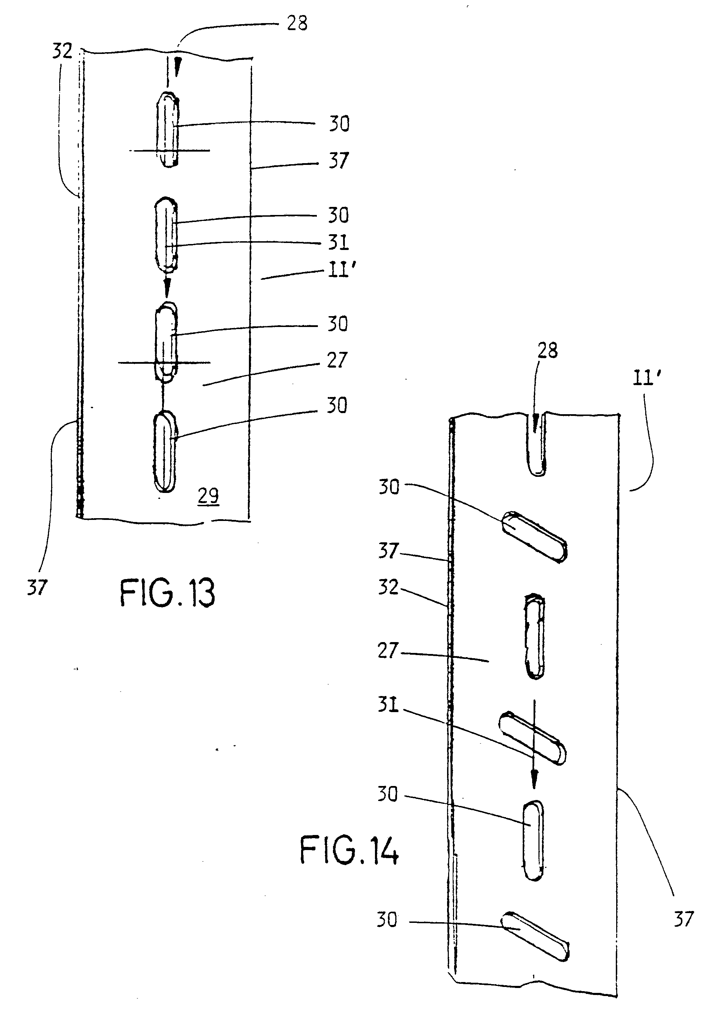

Die Fig. 13 und 14 zeigen alternative Anordnungsmöglichkeiten für die Langlöcher 30 innerhalb der Langlochreihen 28. Gemäß Fig. 13 sind alle Langlöcher 30 einer Reihe 28 mit ihrer längsaxialen Ausrichtung parallel und in einer Linie zur Reihenrichtung 31 angeordnet. Wie aus der Beschreibung zu den Fig. 5 bis 7 klar wird, müssen in diesem Fall die Fixierknebel 23 in einem Winkel von 90° gegenüber den Längsstegen 19 des Arretierblocks 16 verdreht werden, um ein Einsetzen in die Langlöcher zu ermöglichen. Beim Einführen des ersten Fixierknebels 23 ist natürlich auch eine Drehung des Arretierblockes 16 als Ganzes möglich. Da die Fixierknebel in der (nicht gezeigten) Einsetzstellung einen Winkel von 90° gegenüber den Langlöchern 30 einnehmen, ist hier eine besonders stabile Halterung des Arretierblockes 16 in der Langlochreihe 28 gegeben.

Ein vorteilhafter Kompromiß zwischen leichter Handhabung und stabiler Halterung ergibt sich durch eine Anordnung der Langlöcher 30, wie sie in Fig. 14 dargestellt ist. Dort sind alternierend Langlöcher 30 in einem spitzen Winkel von etwa 45° und mit einer längsaxialen Ausrichtung parallel in einer Linie zur Reihenrichtung 31 angeordnet. Sind die Längenabstände dabei so gewählt, daß der Abstand der T-Querschenkel 25 der Fixierknebel 23 einem ungeradzahligen Vielfachen der Abstände zwischen den einzelnen, in unterschiedlichen Richtungen angeordneten Langlöchern 30 entspricht, so ist ein Arretierblock 16 immer durch ein parallel und im spitzen Winkel zur Reihenrichtung angeordnetes Langloch fixiert. Dies bedeutet, daß beim Einsetzen des Arretierblocks 16 sinnvollerweise erst ein Fixierknebel 23 in ein parallel zur Reihenrichtung 31 liegendes Langloch durch Verdrehung des ganzen Arretierblockes 16 um 90° gegenüber der Reihenrichtung 31 eingesetzt wird. Dieser Fixierknebel ist besonders stabil in dem entsprechenden Langloch 30 gehalten. Der zweite Fixierknebel 23 braucht nurmehr um einen Winkel von etwa 45° in sich verdreht werden und kann dann ebenfalls in das entsprechende Langloch 30 eingesetzt werden.

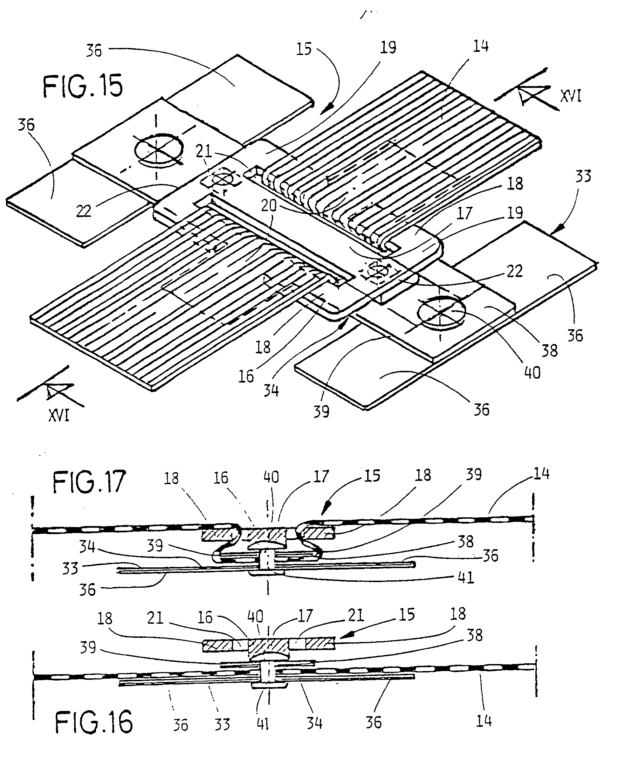

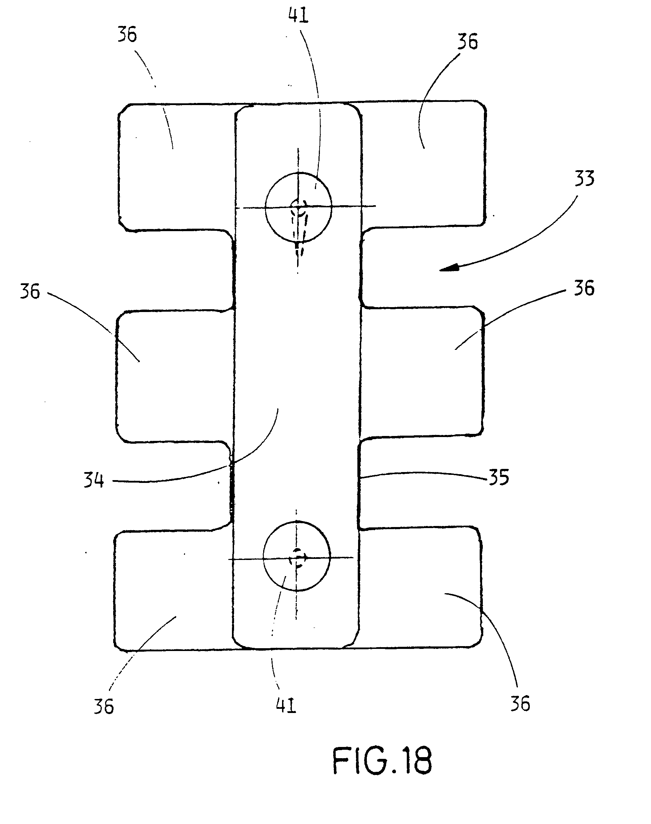

Die Fig. 15 bis 17 zeigen eine alternative Befestigungsmöglichkeit für den Arretierblock 16 an den Seitenwänden 11,11'. Der analog den vorstehenden Figuren ausgebildete Grundkörper des Arretierblockes 16 mit den Umlenkstegen 17,18 und den Längsstegen 19 ist als Ganzes auf einem Klettgewebeträger 33 lösbar befestigt. Die Fixierung des Schulterschräggurtes 14 in Längsrichtung erfolgt in der bereits beschriebenen Weise. Die Höhenanpassung ist durch einfaches Abziehen des Klettgewebeträgers 33 von Bezugstoff der Sitzschale und Wiederaufsetzen in einer anderen Höhenposition durchführbar. In Fig. 18 ist der Klettgewebeträger in Draufsicht dargestellt. Er weist eine parallel zu den Umlenkstegen 17,18 bzw. in Aufsetzstellung auf den Stirnseiten 27 der Seitenwände 11,11' parallel zu diesen verlaufende, etwa rechteckförmige Gewebebahn 34 auf. Diese ist mit über ihre Längsseiten 35 verteilten, beiderseits rechtwinklig abstehenden, etwa quadratisch geformten Ansatzflächen 36 versehen.

In Fixierstellung bedeckt die Gewebebahn 34 mit ihrer gesamten Länge teilweise die Stirnseite 27 der Seitenwand 11,11'. Die seitlichen Ansatzflächen 36 übergreifen die vertikalen Stirnkanten 37 der Seitenwände 11,11' und sind damit im wesentlichen in einer Ebene rechtwinklig zur Gewebebahn 34 angeordnet. Die Fixierflächen des Klettgewebeträgers 33 sind damit in zwei zueinander rechtwinklig stehenden Hauptebenen angeordnet. Da Klettgewebeverbindungen besonders haltbar gegenüber parallel zur Fixierfläche wirkenden Scherkräften sind, ist durch die gezeigte Anbringungsweise des Klettgewebeträgers dessen stabile Halterung gegenüber beliebig am Klettgewebeträger 33 angreifenden Kräften gewährleistet.

Anhand der Fig. 15 bis 17 wird der besondere Aufbau des Arretierblocks 16 in diesem Ausführungsbeispiel und seine lösbare Befestigung am Klettgewebeträger 33 erläutert. Der zentrale Umlenksteg 17 weist auf seiner Unterseite eine parallel zu dieser angeordnete, rechteckförmige Verbreiterungsplatte 38 auf. Deren stegparallele Längsseiten 39 sind im Überdeckungsbereich mit den äußeren Umlenkstegen 18 angeordnet. Die Verbreiterungsplatte 38 steht über die Längsstege 19 des Arretierblocks 16 beiderseits in Verlängerung der Umlenkstege 17,18 hinaus. In ihren Überstehbereichen ist die Verbreiterungsplatte 38 jeweils mit einem Druckknopfoberteil 40 versehen, das in Eingriff mit einem Druckknopfunterteil 41 auf der Gewebebahn 34 des Klettgewebeträgers 33 bringbar ist. Damit ist die lösbare Verbindung zwischen dem Arretierblock 16 und dem Klettgewebeträger 33 geschaffen. Beim Aufsetzen und Anpassen der derart gestalteten Führungsvorrichtung 15 wird wie folgt vorgegangen:

Zuerst wird der Klettgewebeträger 33 in der entsprechenden Höhenposition an der Stirnseite 27 der Seitenwand 11' befestigt. Dann wird der Schulterschräggurt 14 darübergelegt und der Arretierblock 16 aufgedrückt. Dieser Zustand ist in Fig. 16 im gurtparallelen Längsschnitt gezeigt. Anschließend wird der Schulterschräggurt 14 durch die beiden Durchbrechungen 20 in den äußeren Umlenkstegen 18 hindurchgeführt. Es ergibt sich der in Fig. 17 gezeigte Gurtverlauf mit über dem ersten äußeren Umlenksteg 18 einlaufenden, unterhalb der Verbreiterungsplatte 38 vorbeilaufenden, wieder nach oben geführten und über dem zweiten äußeren Umlenksteg 18' auslaufenden Schulterschräggurt 14. Es ergibt sich also ein Gurtverlauf, der im Längsschnitt nach Art einer Kellerfalte gestaltet ist. Die äußeren Umlenkstege 18 bzw. die Verbreiterungsplatte 38 lenken den Schulterschräggurt 14 bei dieser Ausführungsform um einen Winkel von erheblich mehr als 90° um. Dies bedeutet bei Zug am Gurt in dessen Längsrichtung eine besonders stabile Fixierung des Gurtes.

In den Fig. 19 und 20 ist eine weitere alternative Ausführungsform für den Arretierblock 16 dargestellt. Dabei weisen die Umlenkstege eine Länge auf, die einem Mehrfachen der Gurtbreite entspricht. Besonders vorteilhaft ist eine Länge, die dem gewünschten Höhenverstellbereich der Führungsvorrichtung 15 angepaßt ist. In letzterem Falle erübrigt sich also für eine entsprechende Höhenanpassung des Schulterschräggurtes 14 eine Verschiebung des Arretierblockes 16. Bei gelöstem Schulterschräggurt 14 kann dieser innerhalb des Arretierblockes entlang der Umlenkstege 17,18 in die gewünschte Höhenposition verschoben und anschließend durch kurzen Zug am Gurt sowohl in Höhen- als auch Längsrichtung fixiert werden.

Zur Stabilisierung und besseren Halterung des Arretierblockes 16 können weitere Fixierknebel 23' am Arretierblock 16 angeordnet sein. Vorteilhaft ist hier eine gleichmäßige Verteilung der Fixierknebel 23,23' über die Länge des Arretierblockes 16. Die Anordnung der Langlöcher 30 muß natürlich der Position der Fixierknebel 23,23' angepaßt sein. Hier wird auf die Fig. 11 und 12 verwiesen, wonach in den Seitenwänden 11,11' nurmehr ein Paar von Langlöchern 30 notwendig ist. Diese sind an der unteren und oberen Grenze des gewünschten Höhenverstellbereiches angeordnet. Hier ist es lediglich notwendig, den Arretierblock 16 in seiner verlängerten Ausführungsform in die Langlöcher 30 einzusetzen. Die Längs- und Höhenanpassung erfolgt durch Verschiebung und Fixierung des Schulterschräggurtes 14 im Arretierblock 16 selbst.

In Fig. 20 ist noch nach Art einer Explosionsdarstellung die auf den äußeren Umlenkstegen 18 verschiebbar gelagerte Hülse 42 gezeigt, mittels derer die Durchbrechungen 20 nach Hindurchführen des Schulterschräggurtes 14 überbrückbar sind. Die Schließlage der Hülse 42 wird dabei vorteilhafterweise durch eine (nicht dargestellte) Verrastung fixiert.

Es ist darauf hinzuweisen, daß die Umlenkstege und/oder die Verbreiterungsplatte zumindest an ihren Anlageflächen für den Schulterschräggurt 14 mit einer Auflage mit hohem Reibungskoeffizienten versehen sind. Dadurch wird die Haltekraft für die Längsfixierung des Schulterschräggurtes 14 weiter verbessert.

Bezugszeichenliste

1 Kindersitz
2 Rückbank
3 Dreipunkt-Automatik-Gurt
4 Sitzschale
5 Sitzbodenkörper
6 Rückenlehne
7 Kopfstütze
8,8' Seitenrand
9 Armlehnen
10 Fahrtrichtung
11,11' Seitenwand
12 Aussparungen
13 Beckenteil
14 Schulterschräggurt
15 Führungsvorrichtung
16 Arretierblock
17 zentraler Umlenksteg
18 äußerer Umlenksteg
19 Längssteg
20 Durchbrechung
21 Führungsschlitz
22 Außenseite
23 Fixierknebel
24 Freiende
25 T-Querschenkel
26 Winkel
27 Stirnseite
28 Langlochreihe
29 Sitzbezug
30 Langloch
31 Reihenrichtung
32 Außenseite
33 Klettgewebeträger
34 Gewebebahn
35 Längsseite
36 Ansatzfläche
37 Stirnkante
38 Verbreiterungsplatte
39 Längsseite
40 Druckknopfoberteil
41 Druckknopfunterteil
42 Hülse

## Ansprüche

1.  Sicherheits-Kindersitz zur Aufstellung auf einem Fahrzeugsitz (Rückbank 2) mit integrierter Halterung des Kindersitzes (1) und des darin beförderten Kindes durch einen Dreipunkt-Automatik-Gurt (3) des Fahrzeuges mit
    - einer vorzugsweise aus einem formstabilen Kunststoffvollmaterial gefertigten Sitzschale (4), deren Rückenlehne (6) an beiden Seiten (8') mit in Vertikalrichtung verlaufenden, nach vorne abstehenden Seitenwänden (11,11') versehen ist und
    - einer mit einer der beiden Seitenwände (11,11') der Sitzschale (4) lösbar verbundenen Führungsvorrichtung (15) zur der Körpergröße des jeweils beförderten Kindes anpaßbaren Höhenfixierung des Schulterschräggurtes (14) des Dreipunkt-Automatik-Gurtes (3),

    gekennzeichnet durch folgende Merkmale:
    Die Führungsvorrichtung (15) besteht aus einem den Schulterschräggurt (14) durch zug- und reibungsbedingten Haftschluß zusätzlich in Gurtlängsrichtung lösbar fixierenden Arretierblock (16), der einen oder mehrere Umlenkstege (17,18) für den Gurt (14) aufweist.

2.  Sicherheits-Kindersitz nach Anspruch 1,

    dadurch gekennzeichnet,
    daß der Arretierblock (16) drei parallel beabstandet zueinander, in Fixierstellung im wesentlichen quer zur Gurtlängsrichtung verlaufende Umlenkstege (17,18) aufweist.

3. Sicherheits-Kindersitz nach Anspruch 2,
dadurch gekennzeichnet,
daß die Umlenkstege (17,18) endseitig durch Längsstege (19) miteinander verbunden sind.

4. Sicherheits-Kindersitz nach Anspruch 3,
dadurch gekennzeichnet,
daß die beiden äußeren Umlenkstege (18) zur Einführung des Schrägschultergurtes (14) in den Arretierblock (16) vorzugsweise mittig auf einer Länge unterbrochen sind (Durchbrechung 20), die geringer als die Gurtbreite ist.

5. Sicherheits-Kindersitz nach einem der vorgenannten Ansprüche,
dadurch gekennzeichnet,
daß die Umlenkstege (17,18) im Querschnitt rechteckförmig ausgebildet sind.

6. Sicherheits-Kindersitz nach einem der Ansprüche 2 bis 4,
dadurch gekennzeichnet,
daß der zentrale Umlenksteg (17) im Querschnitt gegenüber den äußeren Umlenkstegen (18) verstärkt ist.

7. Sicherheits-Kindersitz nach einem der vorgenannten Ansprüche,
dadurch gekennzeichnet,
daß der Arretierblock (16) jeweils von seinen einander abgewandten Außenseiten (22) der Längsstege (19) im wesentlichen in Verlängerung des zentralen Umlenksteges (17) abstehende Fixierknebel (23) mit T-förmigen Freienden (24) aufweist, die mit ihren T-Querschenkeln (25) jeweils in ein Langloch (30) von jeweils in Vertikalrichtung im Sitzbezug (29) an den Setenwänden (11,11') der Sitzschale (4) verlaufenden Langlochreihen (28) einsetzbar sind.

8. Sicherheits-Kindersitz nach Anspruch 7,
dadurch gekennzeichnet,
daß die Langlochreihen (28) an den in Fahrtrichtung (10) weisenden Stirnseiten (27) der Seitenwände (11,11') angeordnet sind.

9. Sicherheits-Kindersitz nach Anspruch 7,
dadurch gekennzeichnet,
daß die Langlochreihen (28) an den einander abgewandten Außenseiten (32) der Seitenwände (11,11') im Randbereich zu den Stirnseiten (27) angeordnet sind.

10. Sicherheits-Kindersitz nach einem der Ansprüche 7 bis 9,
dadurch gekennzeichnet,
daß die Langlöcher (30) parallel zueinander in einem spitzen Winkel von vorzugsweise 45° zur Reihenrichtung (31) angeordnet sind.

11. Sicherheits-Kindersitz nach Anspruch 10,
dadurch gekennzeichnet,
daß alternierend Langlöcher (30) in einem spitzen Winkel von vorzugsweise 45° und Langlöcher (30) mit einer längsaxialen Ausrichtung parallel in einer Linie zur Reihenrichtung (31) angeordnet sind.

12. Sicherheits-Kindersitz nach einem der Ansprüche 7 bis 9,
dadurch gekennzeichnet,
daß alle Langlöcher (30) einer Reihe mit einer längsaxialen Ausrichtung parallel und in einer Linie zur Reihenrichtung (31) angeordnet sind.

13. Sicherheits-Kindersitz nach einem der Ansprüche 1 bis 6,
dadurch gekennzeichnet,
daß der Arretierblock (16) auf einem Klettgewebeträger (33) lösbar befestigt ist, der in unterschiedlichen Höhenstellungen am Bezugstoff (29) der Stirnseiten (27) bzw. Außenseiten (32) der Seitenwände (11,11') fixierbar ist.

14. Sicherheits-Kindersitz nach Anspruch 13,
dadurch gekennzeichnet,
daß der Arretierblock (16) mittels beiderseits außerhalb seines Arretierbereiches liegender Druckknopfverbindungen (Druckknopfober- 40, -unterteil 41) auf dem Klettgewebeträger (33) befestigbar ist.

15. Sicherheits-Kindersitz nach Anspruch 13 oder 14,
dadurch gekennzeichnet,
daß der Klettgewebeträger (33) eine in Befestigungsstellung parallel zu den Umlenkstegen (17,18) verlaufende, in seiner Fixierstellung an der Stirnseite (27) der Seitenwände (11,11') anliegende, etwa rechteckförmige Gewebebahn (34) mit über deren Längsseiten (35) verteilten, beiderseits rechtwinklig abstehenden Ansatzflächen (36) aufweist, die in Fixierstellung die vertikalen Stirnkanten (37) der Seitenwände (11,11') übergreifen.

16. Sicherheits-Kindersitz nach einem der vorgenannten Ansprüche,
dadurch gekennzeichnet,
daß die Umlenkstege (17,18) eine Länge aufweisen, die einem Mehrfachen der Gurtbreite entspricht.

17. Sicherheits-Kindersitz nach Anspruch 16,
dadurch gekennzeichnet,
daß die Umlenkstege (17,18) eine Länge .aufweisen, die im wesentlichen dem gewünschten
Höhenverstellbereich der Führungsvorrichtung
(15) entspricht.

18. Sicherheits-Kindersitz nach Anspruch 16 oder
17,
dadurch gekennzeichnet,
daß weitere Fixierknebel (23) über die Länge
des zentralen Umlenksteges (17) verteilt von
diesem nach unten abstehen.

19. Sicherheits-Kindersitz nach einem der Ansprüche 16 bis 18,
dadurch gekennzeichnet,
daß statt der Langlochreihen (28) jeweils zwei
Langlöcher (30) an der unteren und oberen
Grenze des Höhenverstellbereichs bzw. eine
der Anzahl und Position der Fixierknebel (23)
des Arretierblockes (16) entsprechende Zahl
von Langlöchern (30) über den gewünschten
Höhenverstellbereich verteilt an den Seitenwänden (11,11') angeordnet sind.

20. Sicherheits-Kindersitz nach einem der Ansprüche 2 bis 19,
dadurch gekennzeichnet,
daß der zentrale Umlenksteg (17) an seiner
Unterseite mit einer Parallel zu dieser angeordneten, rechteckförmigen Verbreiterungsplatte
(38) versehen ist, deren stegparallele Längsseiten (39) im Überdeckungsbereich mit den
äußeren Umlenkstegen (18) angeordnet sind.

21. Sicherheits-Kindersitz nach einem der Ansprüche 13 bis 15 und nach Anspruch 20,
dadurch gekennzeichnet,
daß die Verbreiterungsplatte (38) in Längsrichtung über die Umlenkstege (17,18) hinaussteht
und jeweils im Überstehbereich die Druckknopfverbindungen (Druckknopfober- 40, -
unterteil 41) mit dem Klettgewebeträger (33)
angeordnet sind.

22. Sicherheits-Kindersitz nach einem der Ansprüche 4 bis 21,
dadurch gekennzeichnet,
daß die Durchbrechungen (20) in den äußeren
Umlenkstegen (18) jeweils mittels einer auf
diesen verschiebbar gelagerten Hülse (42)
überbrückbar sind.

23. Sicherheits-Kindersitz nach einem der vorgenannten Ansprüche,

dadurch gekennzeichnet,

daß der Arretierblock (16) aus einem zähelastischen, formstabilen Kunststoff-Vollmaterial gefertigt ist.

24. Sicherheits-Kindersitz nach einem der Ansprüche 2 bis 23,

dadurch gekennzeichnet,
daß die Umlenkstege (17,18) und/oder Verbreiterungsplatte zumindest an ihren Anlageflächen für den Schulterschräggurt (14) mit einer
Auflage mit hohem Reibungskoeffizienten versehen sind.

**Claims**

1. Child's safety seat to be mounted on a vehicle
seat (rear bench 2) with integrated fixture for
holding the child's seat (1) and the child sitting
in it through a three-point autonatic belt (3) of
the vehicle, comprising
   - an integral-moulded seat (4) preferably
made of a dimension-ally stable solid
synthetic material, whose backrest (6) is
provided on either side (8') with side
walls (11, 11') running in vertical direction and projecting forward, and
   - a guiding device (15) separably connected with one of the two side walls (11,
11') of the integral-moulded seat (4) for
fixing in height the diagonal shoulder belt
(14) of the three-point automatic belt (3)
in such a way that it is adapted to the
body height of the child to be transported,
characterized by the following features: The
guiding device (15) comprises a locking unit (16)
separably fixing the diagonal shoulder belt (14)
through tractional and frictional connection additionally in longitudinal direction of the belt, said locking
unit being provided with one or a plurality of deviation studs (17, 18) for the belt (14).

2. Child's safety seat according to claim 1,
characterized in that
the locking unit (16) comprises three parallel,
spaced deviation studs (17, 18) which in fixing
position run substantially at right angles to the
longitudinal direction of the belt.

3. Child's safety seat according to claim 2,
characterized in that
the ends of the deviation studs (17, 18) are
connected with each other by means of longitudinal studs (19).

4. Child's safety seat according to claim 3,

characterized in that
the two outer deviation studs (18) are interrupted (opening 20), preferably in the middle, over a length smaller than the breadth of the belt, for the sake of introducing the diagonal shoulder belt (14) into the locking unit (16).

5. Child's safety seat according to one of the before mentioned claims,
characterized in that
the cross section of the deviation studs (17, 18) is rectangular.

6. Child's safety seat according to one of the claims 2 to 4,,
characterized in that
the cross section of the central deviation stud (17) is larger than the cross sections of the outer deviation studs (18).

7. Child's safety seat according to one of the before mentioned claims,
characterized in that
the locking unit (16) comprises fixing toggles (23) with T-shaped free ends (24), protruding each from the outsides (22), turned away from each other, of the longitudinal studs (19), substantially in prolongation of the central deviation stud (17), the cross legs (25) of said T-shaped ends being insertable in one slot (30) each of the slot rows (28) worked into the seat cover (29) and running along the side walls (11, 11') of the integral-moulded seat (4) in vertical direction.

8. Child's safety seat according to claim 7,
characterized in that
the slot rows (28) are arranged on the faces (27) of the side walls (11, 11') facing the direction of motion (10).

9. Child's safety seat according to claim 7,
characterized in that
the slot rows (28) on the outsides (32), turned away from each other, of the side walls (11, 11') are situated in the area adjacent to the faces (27).

10. Child's safety seat according to one of the claims 7 to 9,
characterized in that
the slots (30) are arranged parallel to each other at an acute angle of preferably 45° to the row direction (31).

11. Child's safety seat according to claim 10,
characterized in that
alternatingly slots (30) situated at an acute angle of preferably 45° and slots (30) whose longitudinal axes are parallel to the row direction (31) are arranged in one line.

12. Child's safety seat according to one of the claims 7 to 9,
characterized in that
the longitudinal axes of all slots (30) of one row are arranged in one line and parallel to the row direction (31).

13. Child's safety seat according to one of the claims 1 to 6,
characterized in that
the locking unit (16) is separably fastened on a burry fabric carrier (33) which can be fixed at different heights on the fabric of the seat cover (39) of the faces (27) or the out-sides (32) of the side walls (11, 11'), respectively.

14. Child's safety seat according to claim 13,
characterized in that
the locking unit (16) can be fastened on the burry fabric carrier (33) by means of snap-fastener connections (upper part of snap fastener 40, lower part 41) situated on either side beyond its locking area.

15. Child's safety seat according to claim 13 or 14,
characterized in that
the burry fabric carrier (33) comprises a length of fabric (34) of approximately rectangular shape which in fastening position runs parallel to the deviation studs (17, 18) and in its fixing position rests against the face (27) of the side walls (11, 11'), and which is provided with attachments (36) distributed over its longitudinal sides (35) and protruding on both sides at right angles, said attachments overlapping in fixing position the vertical face edges (37) of the side walls (11, 11').

16. Child's safety seat according to one of the before mentioned claims,
characterized in that
the length of the deviation studs (17, 18) is a multiple of the belt breadth.

17. Child's safety seat according to claim 16,
characterized in that
the length of the deviation studs (17, 18) corresponds substantially to the desired height adjustment range of the guiding device (15).

18. Child's safety seat according to claim 16 or 17,
characterized in that
further fixing toggles (23), distributed over the length of the central deviation stud (17) project downwards over the said stud.

19. Child's safety seat according to one of the claims 16 to 18,
    characterized in that
    instead of the slot rows (28) two slots (30) each are situated on the lower and upper limits of the height adjustment range, or a number of slots (30) corresponding to the number and position of the fixing toggles (23) of the locking unit (16) and distributed over the desired height adjustment range, are arranged on the side walls (11, 11').

20. Child's safety seat according to one of the claims 2 to 19,
    characterized in that
    the underside of the central deviation stud (17) is provided with a rectangular enlargement plate (38) which is parallel to said underside and whose longitudinal sides (39), which are parallel to the stud, are situated in the area overlapping the outer deviation studs (18).

21. Child's safety seat according to one of the claims 13 to 15 and according to claim 20,
    characterized in that
    the enlargement plate (38) projects in longitudinal direction over the deviation studs (17, 18), and that in the projection area the snap-fastener connections (upper part of snap fastener 40, lower part 41) with the burry fabric carrier (33) are arranged.

22. Child's safety seat according to one of the claims 4 to 21,
    characterized in that
    the openings (20) in the outer deviation studs (18) can be bridged each by means of a sleeve (42) which is displaceable along these studs.

23. Child's safety seat according to one of the before mentioned claims,
    characterized in that
    the locking unit (16) is made of a viscoelastic, dimensionally stable solid synthetic material.

24. Child's safety seat according to one of the claims 2 to 23,
    characterized in that
    the deviation studs (17, 18) and/or the enlargement plate are provided with a covering having a high coefficient of friction, at least on their contact surfaces for the diagonal shoulder belt (14).

**Revendications**

1. Siège d'enfant de sécurité destiné à être posé sur un siège de véhicule (banquette arrière 2), avec retenue intégrée du siège d'enfant (1) et de l'enfant transporté dans ce siège par une ceinture de sécurité automatique à trois points (3) du véhicule, comprenant
   - une coquille de siège (4) qui est de préférence fabriquée en une matière massive constituée par une matière plastique de forme stable, dont le dossier (6) est muni sur les deux côtés (8') de parois latérales (11, 11') s'étendant dans la direction verticale et qui font saillie vers l'avant, et
   - un dispositif de guidage (15) fixé de façon démontable à l'une des deux parois latérales (11, 11') de la coquille (4) du siège, destiné à la fixation en hauteur, adaptable à la stature de l'enfant transporté, de la sangle oblique d'épaule (14) de la ceinture de sécurité automatique à trois points (3), caractérisé par les particularités suivantes :
   le dispositif de guidage (15) est composé d'un bloc d'arrêt (16) qui bloque en supplément la sangle oblique d'épaule (14) dans la direction longitudinale de la sangle par une liaison démontable, par une fixation par adhérence obtenue par traction et par frottement, et qui présente une ou plusieurs barres de renvoi (17, 18) pour la sangle (14).

2. Siège d'enfant de sécurité selon la revendication 1,
   caractérisé
   en ce que le bloc d'arrêt (16) présente trois barres de renvoi (17, 18) parallèles et espacées l'une de l'autre et qui, dans la position de fixation, s'étendent sensiblement transversalement à la direction longitudinale de la sangle.

3. Siège d'enfant de sécurité selon la revendication 2,
   caractérisé
   en ce que les barres de renvoi (17, 18) sont réunies entre elles à leur extrémité par des barres longitudinales (19).

4. Siège d'enfant de sécurité selon la revendication 3,
   caractérisé
   en ce que les deux barres de renvoi extérieures (18) sont interrompues, de préférence au milieu de leur longueur (ouverture 20), sur une longueur plus petite que la largeur de la sangle, pour permettre d'engager la sangle oblique d'épaule (14) dans le bloc d'arrêt (16).

5. Siège d'enfant de sécurité selon une des revendications précédentes,
caractérisé
en ce que les barres de renvoi (17, 18) sont de forme rectangulaire en section transversale.

6. Siège d'enfant de sécurité selon une des revendications 2 à 4,
caractérisé
en ce que la barre de renvoi centrale (17) est renforcée en section transversale comparativement aux barres de renvoi extérieures (18).

7. Siège d'enfant de sécurité selon une des revendications précédentes,
caractérisé
en ce que le bloc d'arrêt (16) présente, sur chacun de ses côtés extérieurs (22) situés l'un à l'opposé de l'autre des barres longitudinales (19), des crampons de fixation (23) qui font saillie sensiblement dans le prolongement de la barre de renvoi centrale (17), et qui sont munis d'extrémités libres (24) en forme de T qui peuvent être engagées par la barre transversale (25) de leur T, dans une boutonnière (30) appartenant à des rangées verticales de boutonnières (28) qui sont pratiquées dans l'habillage (29) du siège, le long des parois latérales (11, 11') de la coquille (4) du siège.

8. Siège d'enfant de sécurité selon la revendication 7,
caractérisé
en ce que les rangées de boutonnières (28) sont prévues sur les bords frontaux (27) des parois latérales (11, 11') qui regardent dans le sens de la marche (10).

9. Siège d'enfant de sécurité selon la revendication 7,
caractérisé
en ce que les rangées de boutonnières (28) sont disposées le long des côtés extérieurs (32) des parois latérales (11, 11') qui sont les plus éloignés l'un de l'autre, dans la région marginale par rapport aux côtés frontaux (27).

10. Siège d'enfant de sécurité selon une des revendications 7 à 9,
caractérisé
en ce que les boutonnières (30) sont disposées parallèlement entre elles, en formant un angle aigu de préférence de 45° avec la direction (31) de la rangée.

11. Siège d'enfant de sécurité selon la revendication 10,
caractérisé

en ce qu'il est prévu en alternance des boutonnières (30) formant un angle aigu, de préférence de 45°, par rapport à la direction (31) de la rangée, et des boutonnières (30) dont l'alignement axial longitudinal est parallèle à la direction (31) de la rangée, et en une seule ligne dans cette direction.

12. Siège d'enfant de sécurité selon une des revendications 7 à 9,
caractérisé
en ce que toutes les boutonnières (30) d'une rangée sont disposées par leur alignement longitudinal axial parallèlement à la direction (31) de la rangée et en une seule ligne dans cette direction.

13. Siège d'enfant de sécurité selon une des revendications 1 à 6,
caractérisé
en ce que le bloc d'arrêt (16) est fixé par une liaison démontable sur un support en tissu auto-agrippant (33) qui peut se fixer, en différentes positions en hauteur, sur le tissu d'habillage (29) des bords frontaux (27) ou des côtés extérieurs (32) des parois latérales (11, 11').

14. Siège d'enfant de sécurité selon la revendication 13,
caractérisé
en ce que le bloc d'arrêt (16) peut être fixé sur le support en tissu auto-agrippant (33) au moyen d'assemblages à boutons-pression (partie supérieure de bouton-pression 40, partie inférieure de bouton-pression 41), qui sont placés de part et d'autre à l'extérieur de la région d'arrêt.

15. Siège d'enfant de sécurité selon la revendication 13 ou 14,
caractérisé
en ce que le support en tissu auto-agrippant (33) présente une bande de tissu (34) de forme à peu près rectangulaire, qui s'étend parallèlement aux barres de renvoi (17, 18) dans la position de fixation, et qui est appuyée contre le côté frontal (27) des parois latérales (11, 11') dans sa position de fixation, cette bande présentant des surtaces de pattes (36) réparties sur ses côtés longitudinaux (35) et qui font saillie perpendiculairement des deux côtés, surfaces qui enveloppent les arêtes frontales verticales (37) des parois latérales (11, 11') dans la position de fixation.

16. Siège d'enfant de sécurité selon une des revendications précédentes,

caractérisé

en ce que les barres de renvoi (17, 18) présentent une longueur qui correspond à plusieurs fois la largeur de la sangle.

17. Siège d'enfant de sécurité selon la revendication 16,
caractérisé
en ce que les barres de renvoi (17, 18) présentent une longueur qui correspond sensiblement à la plage désirée de réglage en hauteur du dispositif de guidage (15).

18. Siège d'enfant de sécurité selon la revendication 16 ou 17,
caractérisé
en ce que d'autres crampons de fixation (23) font saillie vers le bas sur la barre de renvoi centrale (17), dans des positions réparties sur la longueur de cette barre.

19. Siège d'enfant de sécurité selon une des revendications 16 à 18,
caractérisé
en ce qu'en remplacement des rangées de boutonnières (28), il est prévu deux boutonnières (30) à la limite inférieure et à la limite supérieure de la plage de réglage en hauteur, ou un nombre de boutonnières (30) qui correspond au nombre et à la position des crampons de fixation (23) du bloc d'arrêt (16), et qui sont répartis sur la plage désirée de réglage en hauteur, disposées sur les parois latérales (11, 114).

20. Siège d'enfant de sécurité selon une des revendications 2 à 19,
caractérisé
en ce que la barre de renvoi centrale (17) est munie, sur sa face inférieure, d'une plaque d'élargissement (38) de forme rectangulaire, disposée parallèlement à cette barre, et dont les côtés longitudinaux (39) parallèles à la barre sont disposés dans la région recouverte par les barres de renvoi extérieures (18).

21. siège d'enfant de sécurité selon une des revendications 13 à 15 et selon la revendication 20, caractérisé
en ce que la plaque d'élargissement (38) déborde au-delà des barres de renvoi (17, 18) et que, dans les régions débordantes, sont disposés respectivement les assemblages à boutonpression (partie supérieure de boutonpression 40, partie inférieure de bouton-pression 41) qui assemblent la plaque au support en tissu autoagrippant (33).

22. siège d'enfant de sécurité selon une des revendications 4 à 21,
caractérisé
en ce que les ouvertures (20) pratiquées dans les barres de renvoi extérieures (18) peuvent être fermées à l'aide d'un manchon (42) qui est monté pour coulisser sur ces barres.

23. Siège d'enfant de sécurité selon une des revendications précédentes,
caractérisé
en ce que le bloc d'arrêt (16) est formé en une matière massive, faite de matière plastique, de forme stable et viscoplastique.

24. Siège d'enfant de sécurité selon une des revendications 2 à 23,
caractérisé
en ce que les barres de renvoi (17, 18) et/ou la plaque d'élargissement sont munies d'un revêtement possédant un grand coefficient de frottement, du moins sur leur surface de portée qui reçoit la sangle oblique d'épaule (14).

FIG.1

FIG.2

FIG.3

FIG.4

FIG.5

FIG.6

FIG.7

FIG.8

FIG.9

FIG.10

FIG.11

FIG. 12

FIG.13

FIG.14

FIG.15

FIG.17

FIG.16

FIG.18

FIG. 19

FIG. 20